# FASCICULE DE BREVET EUROPEEN

(11) **EP 2 835 125 B1**
(45) Date de publication et mention de la délivrance du brevet: **27.04.2016**
(21) Numéro de dépôt: 14179622.7
(22) Date de dépôt: 04.08.2014
(51) Int. Cl.: A61G 13/08, A61G 13/10, A61G 13/12

(54) **Dispositif d'accrochage pour une table d'opération**
Aufhängevorrichtung für Operationstisch
Attachment device for an operating table

(30) Priorité: 08.08.2013 FR 1357898
(43) Date de publication de la demande: 11.02.2015
(73) Titulaire: Steris, 33185 Le Haillan (FR)
(72) Inventeur: Merlo, Paolo, 38068 Rovereto (IT); Pasquale, Mirko, 35136 Padova (IT); Nardelli, Marco, 30171 Mestre (IT); Rossi, Christian, 35142 Padova (IT)
(74) Mandataire: Robert, Mathias

(56) Documents cités:
- WO-A2-2013/140261
- FR-A1- 2 813 928
- US-A1- 2002 170 115
- US-A1- 2012 204 885

## Description

Est concerné un dispositif d'accrochage d'un premier élément avec un second élément.

Un tel dispositif d'accrochage peut être utilisé dans de nombreuses applications et notamment afin d'équiper une table d'opération.

Une table d'opération permet de positionner un patient à opérer de manière à faciliter le travail d'un chirurgien par exemple. Elle comporte classiquement un plateau sur lequel est placé le patient durant une intervention. Ce plateau peut comprendre plusieurs parties mobiles les unes par rapport aux autres, destinées à supporter par exemple respectivement la tête et le cou, la partie supérieure du tronc, le siège, les cuisses, les jambes et les pieds. Le plateau est relié à une embase en contact avec le sol par une colonne verticale permettant d'assurer la montée et la descente du plateau.

Il est connu d'utiliser des dispositifs d'accrochage afin de relier et articuler les différentes parties du plateau. Un tel dispositif est notamment connu du document FR 2 813 928.

Celui-ci comporte une pièce fixe comprend une extrémité femelle et une pièce amovible comportant une extrémité mâle apte à venir s'encliqueter dans l'extrémité femelle à l'aide d'un verrou d'arrêt logé à l'intérieur de l'extrémité femelle et rappelé vers sa position de verrouillage par un ressort de rappel. L'extrémité mâle comporte un cône de sorte que le verrou puisse glisser sur le cône à l'encontre du ressort de rappel lors de l'introduction du cône dans l'extrémité femelle. Le cône comporte en outre un méplat, l'extrémité mâle comportant un tronçon disposé en arrière du cône et présentant un évidement de réception du verrou, cet évidement s'ouvrant en regard du cône. Le cône est déplaçable par rapport au tronçon entre une position de verrouillage, dans laquelle le méplat est désaligné de l'évidement en emprisonnant ainsi le verrou dans l'évidement, et une position de déverrouillage dans laquelle le méplat est aligné avec l'évidement permettant alors une libération du verrou. Le cône est solidaire de l'extrémité d'une broche disposée dans la pièce amovible et pouvant tourner autour de son axe longitudinal, typiquement un axe horizontal lorsque le dispositif est opérationnel. La broche est équipée d'une poignée faisant saillie latéralement dans une fenêtre de la pièce amovible afin de pouvoir être actionnée manuellement pour permettre le déverrouillage du cône par rapport au verrou de la pièce fixe, ce déverrouillage s'effectuant par rotation de la broche autour de son axe longitudinal au moyen de la poignée.

Un tel dispositif permet un montage ou un démontage rapide d'une pièce par rapport à l'autre. La structure de ce dispositif nécessite cependant un encombrement axial important, ce qui peut être préjudiciable en fonction de l'endroit où ce dispositif doit être situé. Par ailleurs, la sécurité de verrouillage du dispositif repose uniquement sur le verrou.

L'invention telle que revendiquée a notamment pour but d'apporter une solution simple, efficace et économique à ce problème.

A cet effet, elle propose un dispositif d'accrochage d'un premier élément sur un second élément comportant une première partie destinée à être montée sur le premier élément et une seconde partie destinée à être montée sur le second élément, caractérisé en ce que la seconde partie comporte une organe mâle destiné à être engagé de façon amovible dans un organe femelle de la première partie de façon à former ensemble une liaison pivot, les première et seconde parties comportant en outre des moyens d'encliquetage aptes à se verrouiller ensemble lorsque la première partie est amenée dans une position angulaire déterminée par rapport à la seconde partie, ledit dispositif comportant en outre des moyens de déverrouillage pour déverrouiller les moyens d'encliquetage.

Ce type de dispositif peut présenter un encombrement relativement réduit, en particulier horizontalement lorsque le dispositif est opérationnel, ce qui permet de pouvoir le placer à différents endroits d'une table d'opération par exemple. Il permet également d'améliorer l'ergonomie de l'accrochage.

De préférence, les moyens d'encliquetage comportent une partie mâle et une partie femelle aptes à venir en prise l'une avec l'autre en position verrouillée, les moyens de déverrouillage comportant un organe poussoir apte à déplacer ladite partie mâle par rapport à ladite partie femelle des moyens d'encliquetage de manière à dégager l'une desdites parties mâle et femelle. Il s'agit d'une solution fiable et éprouvée, dans son principe. Elle permet une action rapide et sécurisé. On peut en particulier noter que, du fait de la gravité, les moyens d'encliquetage peuvent venir se verrouiller de manière naturelle.

Dans ce cas, les moyens d'encliquetage comportent de préférence des moyens de rappel élastique aptes à déplacer la partie mâle ou la partie femelle vers une position de verrouillage, l'organe poussoir étant apte à déplacer ladite partie mâle ou ladite partie femelle à l'encontre des moyens de rappel élastique. Ceci favorise la sécurité.

Lors de l'étape d'accrochage, la partie mâle peut également se déplacer par rapport à la partie femelle, lors du pivotement de la première partie par rapport à la première partie, de façon à autoriser l'encliquetage desdites parties mâle et femelle.

En outre, le dispositif peut comporter des moyens de maintien pour maintenir l'organe poussoir dans une position de déverrouillage des moyens d'encliquetage.

Ceci permet de faciliter le décrochage de la seconde partie par rapport à la première partie. En effet, dans ce cas, une fois l'organe poussoir actionné par un opérateur, celui-ci est maintenu dans sa position déverrouillé, ce qui laisse les mains libres à l'opérateur pour pouvoir décrocher aisément le second élément du premier élément, ou inversement. Ceci est notamment utile lorsque l'élément à retirer est relativement lourd.

Les moyens de maintien peuvent être aptes à libérer l'organe poussoir après écartement de la première partie du dispositif d'accrochage par rapport à la seconde partie, autour de la liaison pivot.

De cette manière, l'organe poussoir retrouve automatiquement sa position d'origine, sous l'effort de rappel exercé par le ressort correspondant, dès lors que l'élément correspondant est décroché, ce qui limite le nombre de manipulations à effectuer.

De plus, le dispositif peut comporter des moyens de visualisation pour visualiser la position de l'organe poussoir et/ou celle de la partie mâle ou femelle des moyens d'encliquetage.

Il est ainsi possible de vérifier aisément que les deux éléments sont correctement accrochés ensemble.

Selon une caractéristique de l'invention, la première partie comporte au moins un plot destiné à être engagé dans un logement de la seconde partie, ou inversement, lorsque lesdites première et seconde parties sont dans ladite position angulaire déterminée, ledit plot s'étendant suivant un axe perpendiculaire à un axe de la liaison pivot.

De cette manière, on évite que la partie mâle de la liaison pivot puisse se dégager de la partie femelle correspondante.

Selon une autre caractéristique de l'invention, la première partie et/ou la seconde partie est reliée à l'un des premier et second éléments par une liaison pivot additionnelle.

De cette manière, après accrochage, le premier élément est monté pivotant sur le second élément, ou inversement.

Les première et seconde parties peuvent comporter chacune un corps, les organes mâle et femelle formant la liaison pivot, les moyens d'encliquetage et/ou les moyens de déverrouillage étant formés par des pièces distinctes montées sur lesdits corps.

Il est ainsi possible de réaliser un dispositif d'accrochage relativement léger et facile à intégrer sur toute partie ou extension d'une table d'opération, tout en s'assurant que les pièces du dispositif qui sont soumises à des contraintes mécaniques importantes résistent à de telles contraintes.

Le présent sujet concerne en outre une table d'opération, caractérisée en ce qu'elle comporte un dispositif d'accrochage ayant tout ou partie des caractéristiques qui précèdent ou qui sont présentées dans la demande.

Le sujet sera encore mieux décrit et d'autres détails, caractéristiques et avantages de l'invention apparaîtront à la lecture de la description suivante faite à titre d'exemple non limitatif en référence aux dessins annexés dans lesquels :
- la figure 1 est une vue éclatée, en perspective, d'un dispositif d'accrochage selon l'invention,
- les figures 2 à 5 sont des vues de face ou en coupe illustrant différentes positions successives du dispositif d'accrochage, lors de l'étape d'accrochage,
- les figures 6 à 9 sont des vues de face ou en coupe illustrant différentes positions successives du dispositif d'accrochage, lors de l'étape de décrochage.

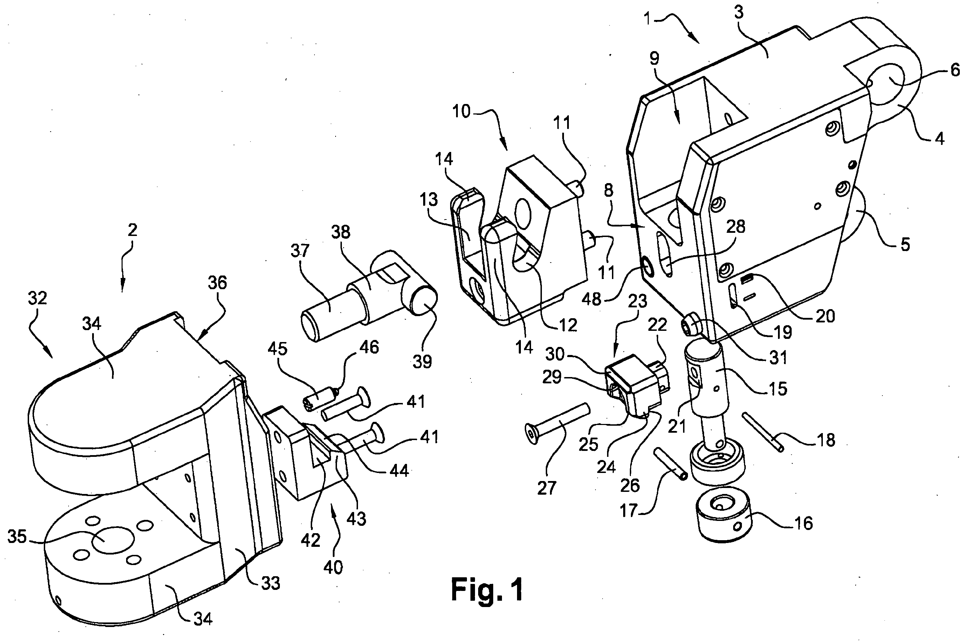

Les figures 1 à 9 illustrent une forme de réalisation d'un dispositif d'accrochage qui comporte une première partie 1 destinée à être montée sur un premier élément, tel par exemple qu'un premier élément d'un plateau d'une table d'opération, destinée à supporter à patient, et une seconde partie 2 destinée à être montée sur un second élément du plateau.

La première partie 1 comporte un premier corps 3 comportant une extrémité arrière au niveau de laquelle sont formées une oreille supérieure 4 et une oreille inférieure 5, comportant chacune un trou 6, 7 servant au passage d'un axe d'assemblage (non représenté).

Plus particulièrement, la première partie 1 est montée pivotante sur l'élément correspondant du plateau, autour de l'axe engagé dans le trou 6 de l'oreille supérieure 4. Par ailleurs, le pivotement de la première partie 1 par rapport à l'élément est actionné par l'intermédiaire d'un vérin dont l'extrémité libre de la tige mobile est solidaire de l'axe engagé dans le trou 7 de l'oreille inférieure 5.

L'extrémité avant du premier corps 3 présente une face avant 8. Un logement 9 de forme générale parallélépipédique est ménagé dans le premier corps 3 et débouche en partie supérieure et au niveau de la face avant 8 du premier corps 3. Un organe femelle 10 d'une liaison pivot est engagé dans ce logement 9 et est fixé au premier corps 3 à l'aide de vis 11. L'organe femelle 10 comporte un trou oblong 12, débouchant latéralement de part et d'autre et en partie supérieure de l'organe femelle 10. Ce trou oblong 12 est incliné du bas vers le haut et de l'avant vers l'arrière, par rapport à la face avant plane 8 du premier corps 3. L'organe femelle 10 comporte en outre une ouverture oblongue 13 débouchant à l'avant et vers le haut dudit organe 10 et débouchant également dans le trou oblong 12 précité. L'extrémité avant de l'organe femelle 10 comporte ainsi deux cornes 14 s'étendant vers le haut et situées de part et d'autre de l'ouverture 13.

Le premier corps 3 comporte en outre un trou débouchant en partie inférieure du corps 3 et servant à l'engagement d'un organe poussoir 15, mobile en translation par rapport au corps 3, entre une position de verrouillage et une position de déverrouillage.

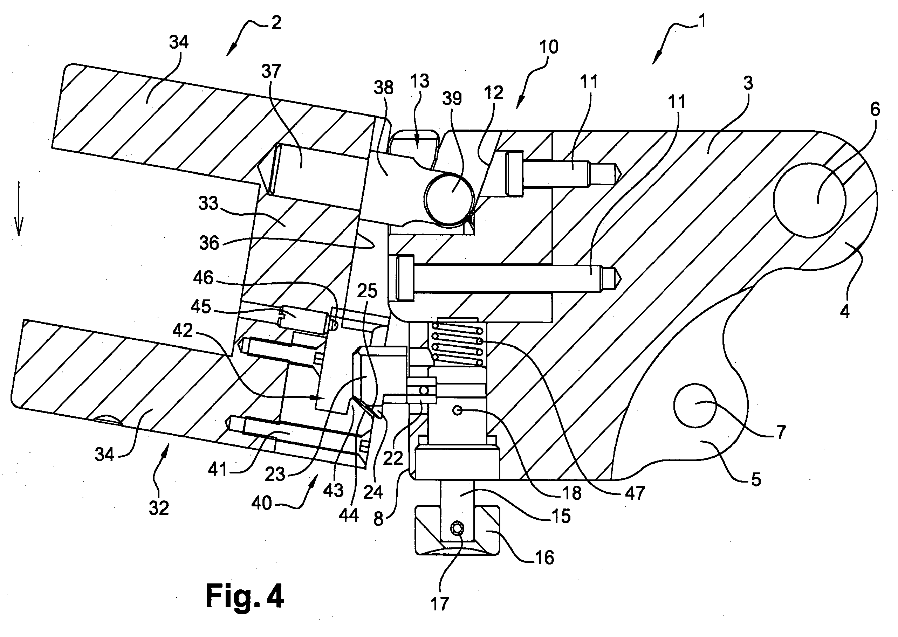

L'organe poussoir 15 a une forme sensiblement cylindrique et présente une extrémité inférieure sur laquelle un bouton cylindrique 16 est fixé par l'intermédiaire d'une goupille 17. L'organe poussoir 15 est rappelé vers sa position de verrouillage, c'est-à-dire vers le bas sur les figures, par l'intermédiaire d'un organe de rappel élastique, tel par exemple qu'un ressort de compression hélicoïdal 47 (voir notamment figure 4).

Une goupille ou une tige 18 est engagée dans un trou de l'organe poussoir 15, l'extrémité libre de la goupille ou tige 18 étant engagée dans un trou oblong 19 du premier corps 3 débouchant sur l'une des faces latérales. La goupille 18 est ainsi visible de l'extérieur du corps 3 et forme un moyen de visualisation de la position de l'organe poussoir. La face latérale précitée comporte de préférence un marquage 20 formé par exemple de couleurs différentes et/ou de traits horizontaux, permettant d'identifier clairement les positions de verrouillage et de déverrouillage de l'organe poussoir 15.

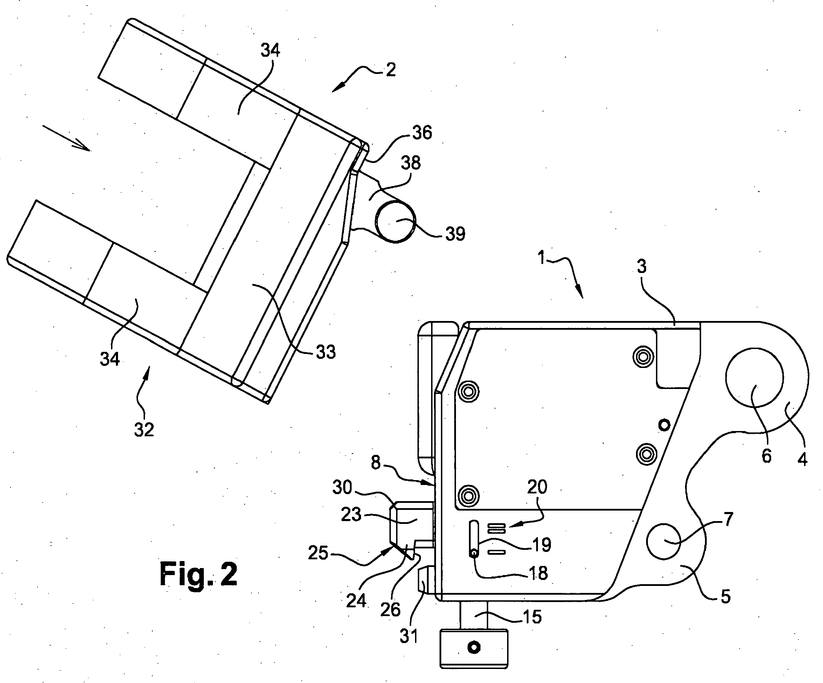

L'extrémité supérieure de l'organe poussoir 15 comporte un méplat 21 orienté vers l'avant, servant à l'appui de l'extrémité d'un plot 22 faisant saillie vers l'arrière et appartenant à une partie mâle d'encliquetage 23. Ladite partie mâle présente une forme de crochet faisant saillie vers le bas. La zone de la partie mâle définissant le crochet 24 comporte une surface oblique 25 (voir notamment figure 2) s'étendant de l'avant vers l'arrière et du haut vers le bas, et une surface de butée 26 globalement parallèle à la paroi avant 8 du premier corps 3. Le plot 22 de ladite partie mâle 23 est fixé à l'organe poussoir 15 à l'aide d'une vis 27 et traverse un trou oblong 28 du premier corps 3. De cette manière, le déplacement de l'organe poussoir 15 entraîne celui de la partie mâle d'encliquetage 23, située en avant du premier corps 3.

La face avant plane de l'organe mâle précité 23 comporte un trou 29 en partie supérieure et un congé ou un chanfrein 30 au niveau du bord supérieur de la face avant, au-dessus du trou 29.

Le premier corps 3 comporte de plus un plot, formé ici par une tête 31 d'une vis engagée dans un taraudage du premier corps 3 situé en partie inférieure de la face avant 8.

Le premier corps 3 comporte enfin un capteur de proximité 48 (figure 1) permettant de vérifier si un second élément est ou non monté sur le premier élément.

La seconde partie du dispositif d'accrochage comporte un second corps 32 en forme générale de U, comportant une base 33 située à l'arrière, à partir de laquelle deux branches 34 s'étendent vers l'avant. Les branches 34 délimitent entre elles un espace servant à l'engagement d'une partie de fixation du deuxième élément, par l'intermédiaire d'un axe ou d'une vis engagé dans des trous 35 ou taraudages ménagés dans les branches 34.

La face arrière 36 de la base comporte par exemple un taraudage en partie supérieure, servant au vissage d'une extrémité filetée 37 d'une partie mâle 38 de la liaison pivot. La partie mâle 38 comporte une partie cylindrique dont l'extrémité avant 37 est filetée et dont l'extrémité arrière porte un axe cylindrique 39 s'étendant perpendiculairement à la partie cylindrique, de part et d'autre de cette dernière, destiné à être engagé dans le trou oblong incliné 12 de la partie femelle 10 de la liaison pivot. Le diamètre de l'axe 39 correspond sensiblement à la largeur du trou oblong incliné 12, un jeu de fonctionnement étant toutefois prévu.

La base 33 comporte en outre un logement de forme parallélépipédique en partie inférieure, débouchant vers le bas et vers l'arrière. Une partie femelle d'encliquetage 40 est montée dans le logement et est fixée au second corps 32 à l'aide de vis 41. La partie femelle 40 comporte une rainure 42 débouchant latéralement de part et d'autre de la partie femelle 40 et débouchant vers le haut. La rainure 42 est située à l'arrière de la base 33 et est destinée à coopérer avec le crochet 24 de la partie mâle d'encliquetage 23. La partie femelle d'encliquetage 40 comporte ainsi une partie 43 en saillie vers le haut par rapport au fond de la rainure 42, située en arrière de la rainure 42. La surface supérieure 44 de cette partie en saillie 43 est oblique et s'étend du haut vers le bas et de l'avant vers l'arrière.

Enfin, la base 33 comporte un taraudage dans lequel est vissée une douille 45 creuse ou semi-creuse, dont une extrémité comporte une bille rétractable 46 montée sur ressort. La bille 46 est ainsi déplaçable entre une position rétractée dans laquelle elle est logée entièrement ou partiellement dans la douille 45, et une position déployée dans laquelle elle fait saillie en arrière de la face arrière 36 de la base 33 du second corps 32. La bille 46 est soumise à un effort de rappel exercé par un organe élastique non visible, tendant à la déplacer vers sa position déployée. La bille 46 est destinée à s'encliqueter dans le trou 29 de la partie mâle d'encliquetage 23.

Avantageusement, pour des raisons de poids et de coût, les deux corps 3, 32 sont de préférence réalisés en alliage d'aluminium, tandis que les parties mâle et femelle 38, 10 de la liaison pivot et les parties mâle et femelle d'encliquetage 23, 40 sont réalisées en un acier inoxydable.

Le fonctionnement d'un tel dispositif d'accrochage est le suivant.

On décrira tout d'abord une étape d'accrochage du second élément sur le premier élément, en référence aux figures 2 à 5.

Dans ce cas, la première partie 1 est tout d'abord montée pivotante sur le premier élément et la seconde partie 2 est fixée ou montée pivotante sur le second élément, les deux parties 1, 2 étant écartées l'une de l'autre, comme illustré à la figure 2.

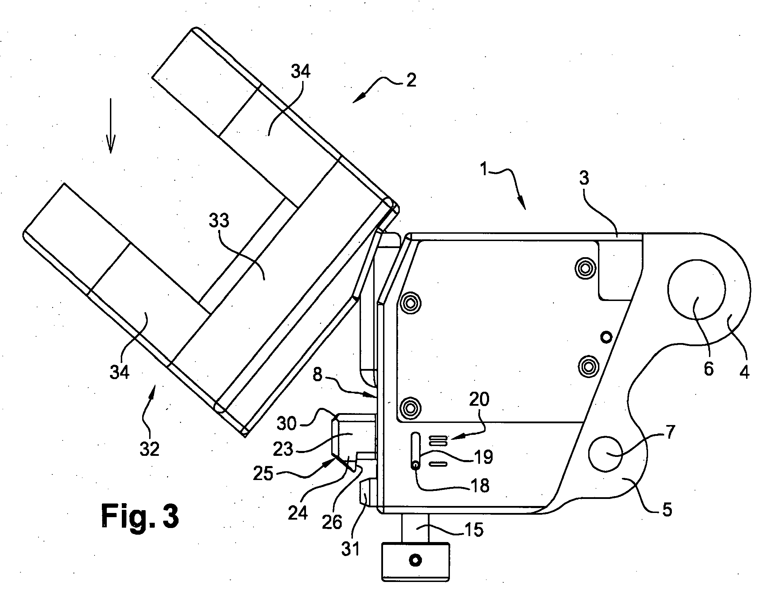

Le second élément est ensuite rapproché du premier élément de façon à engager l'axe 39 de la partie mâle 38 de la liaison pivot dans le trou oblong correspondant 12 de la partie femelle 10 de la liaison pivot. Plus particulièrement, la tige de la partie mâle 38 est engagée dans l'ouverture 13 et l'axe 39 est engagé dans le trou oblong 12. Sous l'effet du poids du second élément et de la seconde partie 2, l'axe 39 glisse alors jusqu'à venir en butée au fond du trou oblong 12 (figure 3). Lors de cette étape, la face arrière 36 de la base 33 du second corps 32 est maintenue avec une certaine inclinaison par rapport à la face avant 8 du premier corps 3, par exemple avec un angle par exemple supérieur à 7 ou 8°.

On fait ensuite pivoter progressivement le second élément et la seconde partie 2 par rapport au premier élément et à la première partie 1, de façon à réduire l'angle précité entre la face arrière plane 36 de la base 33 du second corps 32 et la face avant plane 8 du premier corps 3 (figure 4). Lors de ce rapprochement des deux parties 1, 2, les surfaces obliques 25, 44 des parties mâle et femelle d'encliquetage 23, 40 viennent en appui l'une sur l'autre. De cette manière, sous l'effet du poids du second élément et de la seconde partie 2, lorsque l'opérateur relâche progressivement le second élément, la partie en saillie 43 de la partie femelle d'encliquetage 40 repousse la partie mâle d'encliquetage 23 et l'organe poussoir 15 vers le haut, à l'encontre de l'effort de rappel exercé par le ressort correspondant 47 sur l'organe poussoir 15.

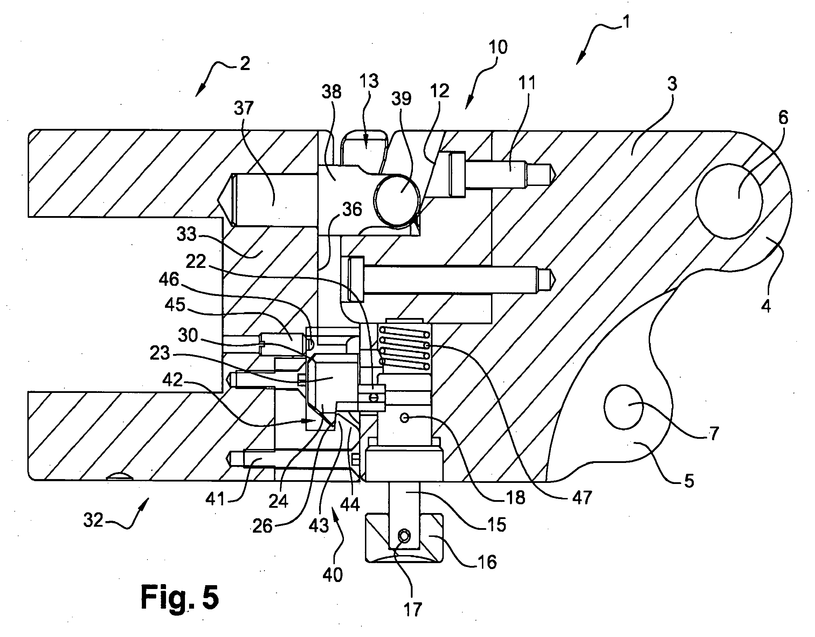

Lorsque l'angle précité entre les deux parties 1, 2 est nul ou quasi nul, le crochet 24 de la partie mâle d'encliquetage 23 est engagé et verrouillé dans la rainure 42 de la partie femelle d'encliquetage 40 (figure 5). Parallèlement, la tête 31 de la vis est engagée dans le logement correspondant de la seconde partie 2. La seconde partie 2 est alors fixée et verrouillée sur la première partie 1 pour l'empêcher de tourner suivant un axe longitudinal : le second élément est accroché au premier élément.

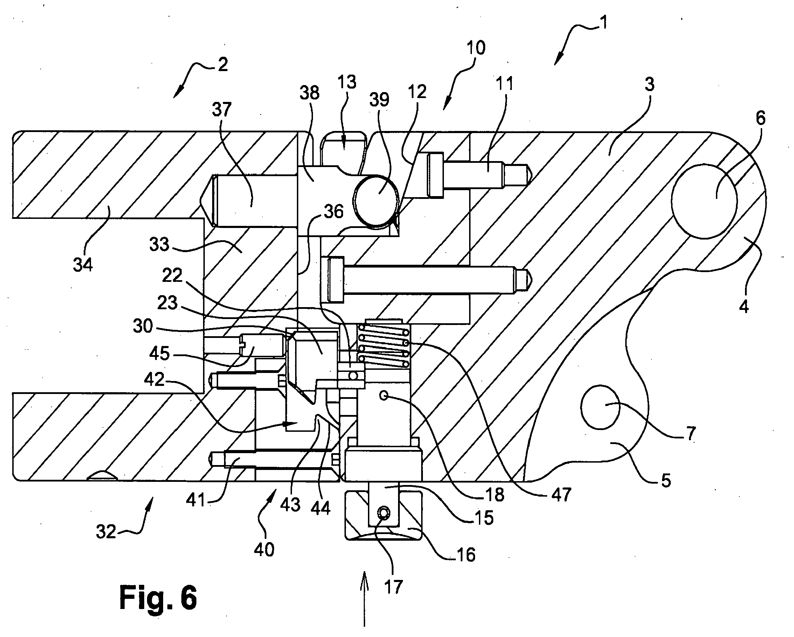

Les figures 6 à 9 illustrent une étape de décrochage du second élément par rapport au premier élément.

Afin de réaliser un tel décrochage, il convient tout d'abord de déverrouiller les moyens de verrouillage précités 23, 40. Pour cela, l'opérateur appui sur l'organe poussoir 15 qui est déplacé vers le haut jusqu'à atteindre sa position de déverrouillage dans laquelle il est maintenu par insertion de la bille rétractable 46 dans le trou correspondant 29 de la partie mâle d'encliquetage 23 (figure 6). On notera que, lors de ce mouvement de l'organe poussoir 15, la bille 46 est déplacée vers sa position rétractée par appui sur le chanfrein 30 ou le congé de la partie mâle d'encliquetage 23, puis retrouve sa position déployée, dans laquelle elle vient s'insérer dans le trou correspondant 29.

La goupille 18 indique alors que l'organe poussoir 15 est en position supérieure ouverte ou déverrouillée, de façon à signifier à l'opérateur que le second élément peut être retiré.

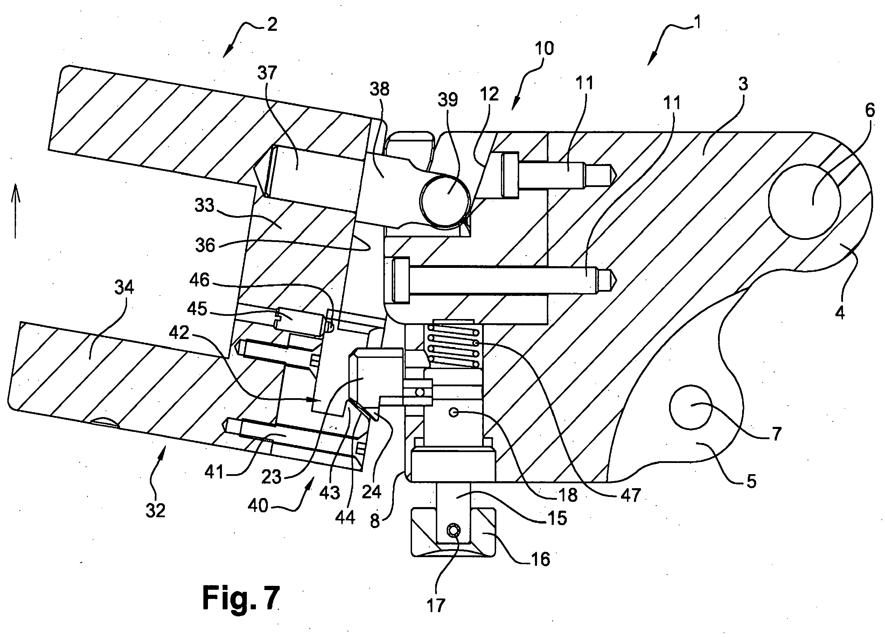

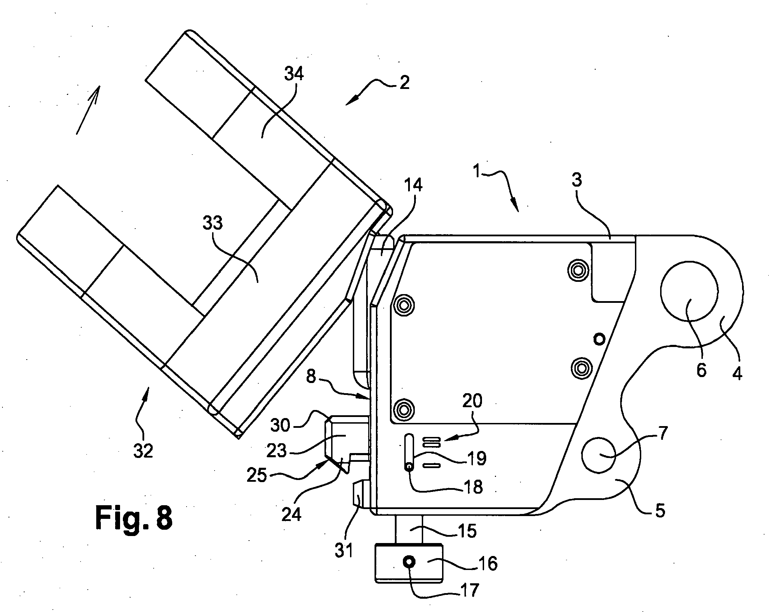

La seconde partie 2 est alors pivotée par rapport à la première partie 1, autour de la liaison pivot, de manière à dégager la tête 31 de la vis du logement correspondant (figures 7 et 8). Lors ce mouvement de pivotement, la bille 46 est dégagée du trou 29 de la partie mâle d'encliquetage 23, cette partie 23 étant alors rappelée vers le bas par l'organe poussoir 15 et son ressort de rappel 47 tout en étant dégagée de la rainure 42.

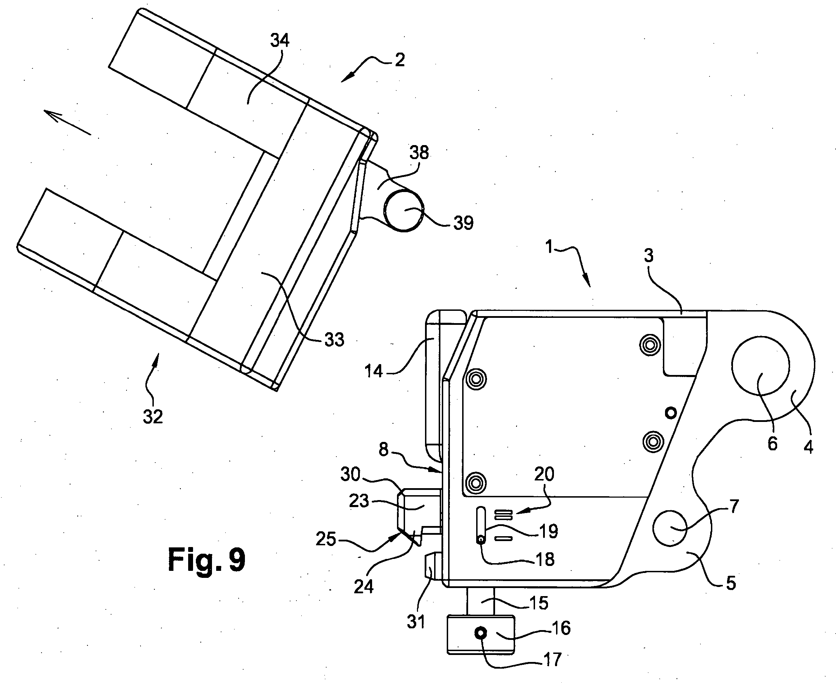

L'organe mâle 38 de la liaison pivot peut alors être dégagé de l'organe femelle correspondant 10, de manière à décrocher la seconde partie 2 de la première partie 1, et donc le second élément du premier élément (figure 9).

L'invention propose ainsi un dispositif d'accrochage permettant de réaliser rapidement et de façon ergonomique l'accrochage et le décrochage d'un élément par rapport à un autre.

## Revendications

1. Dispositif d'accrochage d'un premier élément avec un second élément, le dispositif d'accrochage comportant une première partie (1) destinée à être montée sur le premier élément et une seconde partie (2) destinée à être montée sur le second élément, **caractérisé en ce que** la seconde partie (2) comporte un organe mâle (38) destiné à être engagé de façon amovible dans un organe femelle (10) de la première partie (1) de façon à former ensemble une liaison pivot, les première et seconde parties (1, 2) comportant en outre des moyens d'encliquetage (23, 40) aptes à se verrouiller ensemble lorsque la première partie (1) est amenée dans une position angulaire déterminée par rapport à la seconde partie (2), ledit dispositif comportant en outre des moyens de déverrouillage (15) pour déverrouiller les moyens d'encliquetage (23, 40), les moyens d'encliquetage comportant une partie mâle (23) et une partie femelle (40) aptes à venir en prise l'une avec l'autre en position verrouillée, les moyens de déverrouillage comportant un organe poussoir (15) apte à déplacer ladite partie mâle (23) par rapport à ladite partie femelle (40) des moyens d'encliquetage de manière à dégager l'une desdites parties mâle et femelle (23, 40) par rapport à l'autre, le dispositif comportant des moyens de maintien (45, 46, 29) pour maintenir l'organe poussoir (15) dans une position de déverrouillage des moyens d'encliquetage (23, 40).

2. Dispositif d'accrochage selon la revendication 1, **caractérisé en ce que** les moyens d'encliquetage comportent des moyens de rappel élastique (47) aptes à déplacer la partie mâle (23) ou la partie femelle (40) vers une position de verrouillage, l'organe poussoir (15) étant apte à déplacer ladite partie mâle (23) ou ladite partie femelle (40) à l'encontre des moyens de rappel élastique (47).

3. Dispositif d'accrochage selon la revendication 1 ou 2, **caractérisé en ce que** les moyens de maintien (45, 46, 29) sont aptes à libérer l'organe poussoir (15) après écartement de la première partie (1) du dispositif d'accrochage par rapport à la seconde partie (2), autour de la liaison pivot.

4. Dispositif d'accrochage selon l'une des revendications 1 à 3, **caractérisé en ce qu'**il comporte des moyens de visualisation (18, 19, 20) pour visualiser la position de l'organe poussoir (15) et/ou de celle de la partie mâle (23) ou femelle (40) des moyens d'encliquetage.

5. Dispositif d'accrochage selon l'une des revendications 1 à 4, **caractérisé en ce que** la première partie (1) comporte au moins un plot (31) destiné à être engagé dans un logement de la seconde partie (2), ou inversement, lorsque lesdites première et seconde parties (1, 2) sont dans ladite position angulaire déterminée, ledit plot (1, 2) s'étendant suivant un axe perpendiculaire à un axe (39) de la liaison pivot.

6. Dispositif d'accrochage selon l'une des revendications 1 à 5, **caractérisé en ce que** la première partie (1) et/ou la seconde partie (2) est reliée à l'un des premier et second éléments par une liaison pivot additionnelle (6, 35).

7. Dispositif d'accrochage selon l'une des revendications 1 à 6, **caractérisé en ce que** les première et seconde parties (1, 2) comportent chacune un corps (3, 32), les organes mâle et femelle (38, 10) formant la liaison pivot, les moyens d'encliquetage (23, 40) et/ou les moyens de déverrouillage (15) étant formés par des pièces distinctes montées sur lesdits corps (3, 32).

8. Table d'opération, **caractérisée en ce qu'**elle comporte un dispositif d'accrochage selon l'une des revendications 1 à 7.

## Patentansprüche

1. Vorrichtung zur Befestigung eines ersten Elements mit einem zweiten Element, wobei das Befestigungselement ein erstes Teil (1) enthält, das dazu bestimmt ist, auf das erste Element montiert zu werden, und ein zweites Teil (2), das dazu bestimmt ist, auf das zweite Element montiert zu werden, **dadurch gekennzeichnet, dass** das zweite Teil (2) ein Steckelement (38) aufweist, das dazu bestimmt ist, abnehmbar in ein Aufnahmeelement (10) des ersten Teils (1) gesteckt zu werden, so dass eine drehbare Verbindung entsteht, wobei das erste und das zweite Teil (1, 2) darüber hinaus Rastmittel (23, 40) aufweisen, die sich verriegeln können, wenn das erste Teil (1) in eine in Bezug auf das zweite Teil (2) festgelegte Winkelposition gebracht wird, wobei besagte Vorrichtung darüber hinaus Entriegelungsvorrichtungen (15) zum Entriegeln der Rastmittel (23, 40) aufweist, und die Rastmittel einen Steckteil (23) und einen Aufnahmeteil (40) aufweisen, die ineinander eingreifen und sich verriegeln können, und die Entriegelungsvorrichtungen ein Schubelement (15) aufweisen, das in der Lage ist, besagtes Steckteil (23) in Bezug auf besagtes Aufnahmeteil (40) der Rastmittel so zu verschieben, dass das besagte Steck- oder Aufnahmeteil (23, 40) vom anderen freigegeben wird, um das Schubelement (15) in einer Position der Entriegelung der Rastmittel (23, 40) zu halten.

2. Befestigungsvorrichtung nach Anspruch 1, **dadurch gekennzeichnet, dass** die Rastmittel elastische Rückholmittel (47) aufweisen, die in der Lage sind, das Steckteil (23) oder das Aufnahmeteil (40) in eine Verriegelungsposition zu verschieben, wobei das Schubelement (15) in der Lage ist, besagtes Steckteil (23) oder besagtes Aufnahmeteil (40) gegen die elastischen Rückholmittel (47) zu verschieben.

3. Befestigungsvorrichtung nach Anspruch 1 oder 2, **dadurch gekennzeichnet, dass** die Haltevorrichtungen (45, 46, 29) in der Lage sind, das Schubelement (15) nach Abspreizen des ersten Teils (1) der Befestigungsvorrichtung vom zweiten Teil (2) um die Drehverbindung herum freizusetzen.

4. Befestigungsvorrichtung nach einem der Ansprüche 1 bis 3, **dadurch gekennzeichnet, dass** es Anzeigemittel (18, 19, 20) zum Anzeigen der Position des Schubelements (15) und/oder des Steckteils (23) oder Aufnahmeteils (40) der Rastmittel anzeigt.

5. Befestigungsvorrichtung nach einem der Ansprüche 1 bis 4, **dadurch gekennzeichnet, dass** das erste Teil (1) mindestens einen Zapfen (31) enthält, der dazu bestimmt ist, in eine Aufnahme des zweiten Teils (2) oder umgekehrt einzurasten, wenn sich besagter erster und zweiter Teil (1, 2) in der besagten bestimmten Winkelposition befinden, wobei sich der Zapfen (1, 2) auf einer Achse erstreckt, die senkrecht zur Achse (39) der Drehverbindung verläuft.

6. Befestigungsvorrichtung nach einem der Ansprüche 1 bis 5, **dadurch gekennzeichnet, dass** das erste Teil (1) und/oder das zweite Teil (2) mit dem ersten oder zweiten Element über eine zusätzliche Drehverbindung miteinander verbunden sind.

7. Befestigungsvorrichtung nach einem der Ansprüche 1 bis 6, **dadurch gekennzeichnet, dass** das erste und das zweite Teil (1, 2) jeweils ein Gehäuse (3, 32) umfassen, wobei das Steck- und das Aufnahmeteil (38, 10) die Drehverbindung bilden, und die Rastmittel. (23, 40) und/oder die Entriegelungsvorrichtungen (15) durch unterschiedliche, auf besagtes Gehäuse (3, 32) montierte Teile gebildet werden.

8. Operationstisch, **dadurch gekennzeichnet, dass** er eine Befestigungsvorrichtung nach einem der Ansprüche 1 bis 7 aufweist.

## Claims

1. A device for attaching a first element with a second element, with the attachment device comprising a first part (1) intended to be mounted on the first element and a second part (2) intended to be mounted on the second element, **characterized in that** the second part (2) comprises a male member (38) intended to be removably engaged into a female member (10) of the first part (1) so as to form together a pivot connection, with the first and second parts (1, 2) further comprising, latching means (23, 40) adapted to lock together when the first part (1) is brought to a determined angular position relative to the second part (2), with said device further comprising unlocking means (15) to release the latching means (23, 40), with the latching means comprising a male part (23) and a female part (40) adapted to engage together in a locked position, with the unlocking means comprising a push member (15) adapted to move said male part (23) relative to said female part (40) of the latching means so as to release one said male and female parts (23, 40) relative to each other, with the device comprising holding means (45, 46, 29) for holding the push member (15) in an unlocking position of the latching means (23, 40).

2. An attachment device according to claim 1, **characterized in that** the latching means comprise elastic return means (47) able to move the male part (23) or the female part (40) towards a locking position, with the push member (15) being able to move said male part (23) or said female part (40) against the elastic return means (47).

3. An attachment device according to claim 1 or 2, **characterized in that** the holding means (45, 46, 29) are able to release the push member (15) after spacing of the first part (1) of the attachment device with respect to the second part (2) around the pivot connection.

4. An attachment device according to one of claims 1 to 3, **characterized in that** it comprises display means (18, 19, 20) for displaying the position of the push member (15) and/or that of the male (23) or female (40) part of the latching means.

5. An attachment device according to one of claims 1 to 4, **characterized in that** the first part (1) comprises at least one pad (31) intended to be engaged into a recess of the second part (2), or vice versa, when said first and second parts (1, 2) are in said determined angular position, with said pad (1, 2) extending along an axis perpendicular to an axis (39) of the pivot connection.

6. An attachment device according to one of claims 1 to 5, **characterized in that** the first part (1) and/or the second part (2) is connected to one of said first and second elements through an additional pivot connection (6, 35).

7. An attachment device according to one of claims 1 to 6, **characterized in that** the first and second parts (1, 2) each comprise a body (3, 32), with the male and female members (38, 10) forming the pivot connection, with the latching means (23, 40) and/or unlocking means (15) consisting of separate parts mounted on said bodies (3, 32).

8. An operating table, **characterized in that** it comprises an attachment device according to one of claims 1 to 7.
